**Europäisches Patentamt**

**European Patent Office**

**Office européen des brevets**

(19)

(11) Veröffentlichungsnummer: **0 005 173**
**A1**

# (12) EUROPÄISCHE PATENTANMELDUNG

(21) Anmeldenummer: **79100999.6**

(22) Anmeldetag: **31.03.79**

(51) Int. Cl.²: **C 01 B 25/14**

(30) Priorität: **27.04.78 DE 2818422**

(43) Veröffentlichungstag der Anmeldung: **14.11.79**
**Patentblatt 79/23**

(84) Benannte Vertragsstaaten: **CH DE FR GB IT**

(71) Anmelder: **HOECHST Aktiengesellschaft, WERK KNAPSACK, D-5030 Hürth (DE)**

(72) Erfinder: **Krause, Johannes, Dr., Gernotstrasse 5, D-5030 Hürth-Hermülheim (DE)**
Erfinder: **Mainzer, Franz, Bergstrasse 81, D-5030 Hürth (DE)**
Erfinder: **Reichert, Günter, Weierstrasse 26, D-5303 Bornheim-Merten (DE)**
Erfinder: **Niermann, Hermann, Dr., Am Wachberg 34, D-5042 Erftstadt (DE)**

(54) **Verfahren und Vorrichtung zum Austragen von geschmolzenem Phosphorpentasulfid aus einem Reaktor.**

(57) Verfahren und Vorrichtung zum Austragen von geschmolzenem Phosphorpentasulfid über einen Überlauf (6) aus einem Reaktor (1), in welchem Phosphor mit Schwefel bei Temperaturen oberhalb 300°C umgesetzt wird. Man füllt dabei das schmelzflüssige Reaktionsprodukt direkt in Abfüllbehälter (7) definierten Volumeninhalts ab, indem man die Dosiergefäße (3, 5) so dimensioniert, daß sowohl die in sie jeweils einfüllbaren Mengen an Phosphor und Schwefel dem im Endprodukt gewünschten P:S-Mengenverhältnis entsprechen, als auch deren gesamter Volumeninhalt dem Volumeninhalt des Abfüllbehälters gleich ist. Ferner regelt man das Abfüllen so, daß man jeweils den Inhalt der Dosiergefäße in den Reaktor entleert und dadurch gleichzeitig eine entsprechende Menge des Reaktionsproduktes über den Überlauf direkt in den Abfüllbehälter fließen läßt.

EP 0 005 173 A1

ACTORUM AG

0005173

Hoechst Aktiengesellschaft                    HOE 78/H 008


Verfahren und Vorrichtung zum Austragen von geschmolzenem Phosphorpentasulfid aus einem Reaktor


Die vorliegende Erfindung betrifft ein Verfahren zum Austragen von geschmolzenem Phosphorpentasulfid über einen
Überlauf aus einem Reaktor, in welchem Phosphor mit Schwefel bei  Temperaturen oberhalb $300^{\circ}C$ umgesetzt wird und wobei die Ausgangsprodukte in flüssiger Form durch abwechselndes Füllen und Entleeren von Dosiergefäßen mit genau
definierten Einfüllvolumina in den Reaktor eingetragen
werden.

Aus der DE-PS 1 195 282 ist bereits bekannt, Phosphorpentasulfid durch Umsetzung von Phosphor mit Schwefel herzustellen.

Dabei werden die Ausgangsprodukte aus Vorratsgefäßen mit
jeweils genau definierten Füllvolumina abwechselnd gefüllt
und in den Reaktor entleert.

2

Das Reaktionsgemisch wird hierbei durch Kühlung auf Temperaturen von etwa 350 bis 480°C gehalten und die Ausgangskomponenten werden vorzugsweise in Bodennähe, d.h. in den Sumpf des Reaktors eingeleitet. Das Reaktionsprodukt zieht man über einen Überlauf aus dem Reaktor ab und leitet es einem als Vorratsgefäß ausgebildeten Zwischenbehälter zu, durch dessen mit einem Ventil versehene Bodenableitung das $P_2S_5$ auf einen Drehteller gelangt, von wo es der weiteren Verarbeitung zugeführt wird.

Das $P_2S_5$ auf diese Weise aus dem Reaktor auszutragen bringt Nachteile mit sich. Bekanntlich ist schmelzflüssiges $P_2S_5$ an der Luft sebstentzündlich.

Aus diesem Grunde stellt die Lagerung im Zwischenbehälter ein Risiko für das Bedienungspersonal selbst dann dar, wenn diese Lagerung unter Stickstoffatmosphäre erfolgt.

Darüberhinaus besteht die Gefahr des Auslaufens von $P_2S_5$ durch Undichtwerden des Behälters oder der Ventile. Aufgabe der vorliegenden Erfindung war es, das bekannte Verfahren durch Beseitigung der mit ihm verbundenen Nachteile zu verbessern.

Diese Aufgabe konnte dadurch gelöst werden, daß man das schmelzflüssige Reaktionsprodukt direkt in Abfüllbehälter definierten Volumeninhalts abfüllt. Dies geschieht, indem man die Dosiergefäße so dimensioniert, daß sowohl die in sie jeweils einfüllbaren Mengen an Phosphor und Schwefel dem im Endprodukt gewünschten P:S-Mengenverhältnis entsprechen, als auch deren gesamter Volumeninhalt dem Volumeninhalt des Abfüllbehälters gleich ist. Das Abfüllen wird dann so geregelt, daß man jeweils den Inhalt der Dosiergefäße in den Reaktor entleert und dadurch gleichzeitig eine entsprechende Menge des Reaktionsproduktes über den Überlauf direkt in den Abfüllbehälter fließen läßt.

Vorzugsweise werden die Dosiergefäße so dimensioniert, daß das Mengenverhältnis von P:S in diesen Gefäßen 27 zu 73 bis 29 zu 71 beträgt.

Gegenüber den bekannten Verfahren ergeben sich aus der erfindungsgemäßen Arbeitsweise die Vorteile, daß entsprechend der großen Genauigkeit, mit der die Dosiergefäße für die Ausgangssubstanzen gefüllt werden können, auch die Genauigkeit der Mengen, die aus dem Überlauf in die Abfüllbehälter fließen, entsprechend groß ist, so daß die Summe der Volumeninhalte der Dosiergefäße ziemlich genau auf den Volumeninhalt der Abfüllbehälter abgestimmt werden kann.

Dies ist insbesondere dann von Bedeutung, wenn die erzeugte $P_2S_5$-Schmelze in den Abfüllbehältern als sog. "cast material" erstarren und versandt werden soll.

Weitere Vorteile sind, daß die Zwischenlagerung größerer, leicht brennbarer Mengen von flüssigem $P_2S_5$ entfällt und auf Zwischenbehälter und Ventile, aus denen ein unkontrolliertes Auslaufen erfolgen könnte, verzichtet werden kann.

Ein weiterer Gegenstand der vorliegenden Erfindung ist eine Vorrichtung zur Durchführung des erfindungsgemäßen Verfahrens.

Diese Vorrichtung besteht aus einem Reaktor 1, der über eine erste Zuführung 2 mit einem Dosiergefäß 3 für Phosphor und über eine zweite Zuführung 4 mit einem weiteren Dosiergefäß 5 für Schwefel verbunden ist und der von seinem oberen Teil aus über einen Überlauf 6 direkt mit einem Abfüllbehälter 7 in Verbindung steht.

Ferner kann an dem Reaktor 1 in einer Höhe, die tiefer als die Anschlußstelle des Überlaufs 6 liegt, noch zusätzlich eine Abflußleitung 8 angebracht sein, die über ein Ventil 9 zu einer Kühlwalze 10 führt.

Dies hat den Vorteil, daß bei Bedarf, z.B. bei Störung der Anlage oder wenn kurzfristig schuppiges Material gewünscht wird, die $P_2S_5$-Schmelze sofort auf eine Kühlwalze geleitet werden kann, indem das Ventil 9, welches normalerweise geschlossen ist, geöffnet wird.

Sollte dieses Ventil 9 undicht werden, so ist damit keine Gefahr verbunden, da auslaufende Schmelze auf der Kühlwalze 10 erstarrt und dann nicht mehr selbstentzündlich ist. Die Dosiergefäße 3 und 5 sind zweckmäßigerweise so dimensioniert, daß ihr Volumeninhalt im Verhältnis zueinander dem im Endprodukt gewünschten P:S-Verhältnis und im Gesamtvolumen dem Volumeninhalt des Abfüllbehälters 7 entspricht.

Auf diese Weise lassen sich sehr genaue Mengen des Reaktionsproduktes abfüllen und die Zugabe der Ausgangsprodukte und das Abfüllen des Endproduktes kann von der Abfüllstation aus gesteuert werden.

Beispiel

Aus dem Dosiergefäß 3 wurden 27,5 kg geschmolzener P über die Zuführung 2 und aus dem Dosiergefäß 5 wurden 72,5 kg geschmolzener S über die Zuführung 4 in den Bodensumpf des Reaktors 1 gegeben, der bis zur Anschlußstelle des Überlaufs 6 mit einer $P_2S_5$-Schmelze von etwa 350°C gefüllt war. Dadurch lief gleichzeitig eine den Ausgangssubstanzen entsprechende Menge an $P_2S_5$-Schmelze über den Überlauf 6 in den Abfüllbehälter 7 ab.

Sowohl die Dosiergefäße 3 und 5 als auch die Zuführungen 2 und 4 sowie der Überlauf 6 waren beheizt, um die Produkte flüssig zu halten. Nach Erstarren der Schmelze befanden sich im Abfüllbehälter 7 99,8 kg $P_2S_5$ mit einem Gehalt an P von 27,5 Gew.% und an S von 72,4 Gew.%.

0005173

HOECHST AKTIENGESELLSCHAFT          HOE 78/H 008

Verfahren und Vorrichtung zum Austragen von geschmolzenem Phosphorpentasulfid aus einem Reaktor

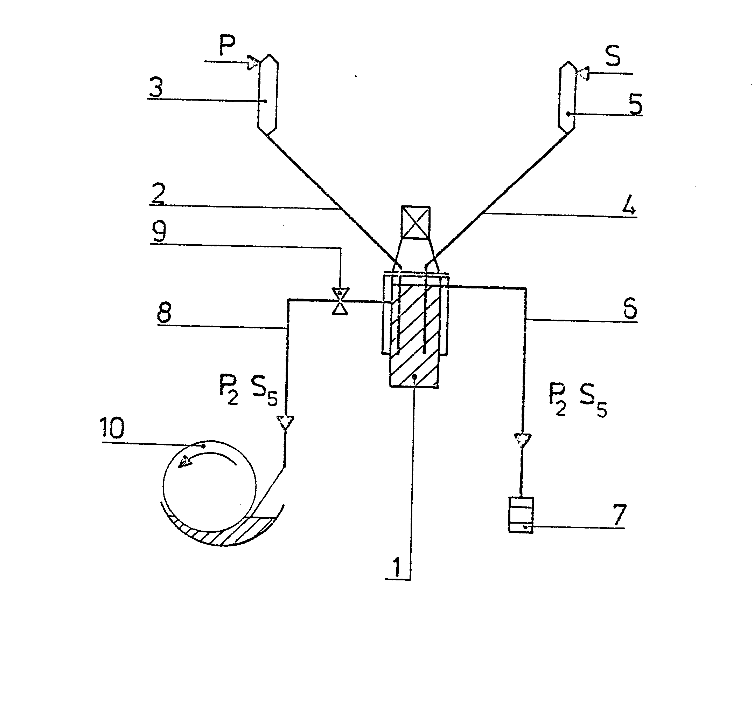

Patentansprüche

1. Verfahren zum Austragen von geschmolzenem Phosphorpentasulfid über einen Überlauf aus einem Reaktor, in welchem Phosphor mit Schwefel bei Temperaturen oberhalb 300°C umgesetzt wird und wobei die Ausgangsprodukte in flüssiger Form durch abwechselndes Füllen und Entleeren von Dosiergefäßen mit genau definierten Einfüllvolumina in den Reaktor eingetragen werden, dadurch gekennzeichnet, daß man das schmelzflüssige Reaktionsprodukt direkt in Abfüllbehälter definierten Volumeninhalts abfüllt, indem man die Dosiergefäße so dimensioniert, daß sowohl die in sie jeweils einfüllbaren Mengen an Phosphor und Schwefel dem im Endprodukt gewünschten P : S - Mengenverhältnis entsprechen, als auch deren gesamter Volumeninhalt dem Volumeninhalt des Abfüllbehälters gleich ist und man das Abfüllen so regelt, daß man jeweils den Inhalt der Dosiergefäße in den Reaktor entleert und dadurch gleichzeitig eine entsprechende Menge des Reaktionsproduktes über den Überlauf direkt in den Abfüllbehälter fließen läßt.

2. Verfahren nach Anspruch 1, <u>dadurch gekennzeichnet</u>, daß man die Dosiergefäße so dimensioniert, daß das Mengenverhältnis von P : S in diesen Gefäßen 27 zu 73 bis 29 zu 71 beträgt.

3. Vorrichtung zum Austragen von geschmolzenem Phosphorpentasulfid aus einem Reaktor nach einem Verfahren gemäß Anspruch 1, bestehend aus einem Reaktor (1), der über eine erste Zuführung (2) mit einem Dosiergefäß (3) für Phosphor und über eine zweite Zuführung (4) mit einem weiteren Dosiergefäß (5) für Schwefel verbunden ist und der von seinem oberen Teil aus über einen Überlauf (6) direkt mit einem Abfüllbehälter (7) in Verbindung steht.

4. Vorrichtung nach Anspruch 3, <u>dadurch gekennzeichnet</u>, daß an dem Reaktor (1) in einer Höhe, die tiefer als die Anschlußstelle des Überlaufs (6) liegt, zusätzlich eine Abflußleitung (8) angebracht ist, die über ein Ventil (9) zu einer Kühlwalze (1o) führt.

5. Vorrichtung nach Anspruch 3 oder 4, <u>dadurch gekennzeichnet</u>, daß die Dosiergefäße (3 und 5) so dimensioniert sind, daß ihr Volumeninhalt im Verhältnis zu einander dem im Endprodukt gewünschten P : S - Verhältnis im Gesamtvolumen dem Volumeninhalt des Abfüllbehälters (7) entspricht.

1/1

Europäisches Patentamt

**EUROPÄISCHER RECHERCHENBERICHT**

0005173

Nummer der Anmeldung

EP 79 10 0999

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | JOURNAL OF APPLIED CHEMISTRY OF THE USSR, Band 51, Nr. 4, Teil 2, April 1978, New York, USA, I.S. NIKANDROV et al.: "Kinetics of interaction of sulfur and phosphorus melts", Seiten 892-894 -- | |
| DA | DE - B - 1 195 282 (KNAPSACK-GRIESHEIM AG) -- | |
| A | CHEMIE INGENIEUR TECHNIK, Juli 1965 Weinheim, Bergstr. DR. J. CREMER: "Zur grosstechnischen Herstellung und Anwendung von Phosphorpentasulfid", Seiten 705-709 -- | |
| A | US - A - 2 569 128 (O.C. JONES) ---- | |

**KLASSIFIKATION DER ANMELDUNG (int.Cl.²)**

C 01 B 25/14

**RECHERCHIERTE SACHGEBIETE (Int. Cl.²)**

C 01 B 25/14

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 29-05-1979 | BREBION |

EPA form 1503.1  06.78